# EUROPÄISCHE PATENTSCHRIFT

(11) **EP 1 289 293 B1**
(45) Veröffentlichungstag und Bekanntmachung des Hinweises auf die Patenterteilung: **19.07.2006**
(21) Anmeldenummer: 01119022.0
(22) Anmeldetag: 07.08.2001
(51) Int. Cl.: H04N 7/088

(54) **Übertragung von zusätzlichen digitalen Informationen parallel zu einem analogen Fernsehsignal**
Transmission of digital additional information in parallel with an analog television signal
Transmission d'informations numériques additionnelles parallèlement à un signal de télévision analogique

(43) Veröffentlichungstag der Anmeldung: 05.03.2003
(73) Patentinhaber: Waldorf, Matthias, 80469 München (DE)
(72) Erfinder: Waldorf, Matthias, 80469 München (DE)

(56) Entgegenhaltungen:
- CHAMBERS J P: "Enhanced UK teletext moves towards still pictures" IEEE TRANSACTIONS ON CONSUMER ELECTRONICS, AUG. 1980, USA, Bd. CE-26, Nr. 3, Seiten 527-554, XP002185650 ISSN: 0098-3063
- BENDER W ET AL: "TECHNIQUES FOR DATA HIDING" IBM SYSTEMS JOURNAL, IBM CORP. ARMONK, NEW YORK, US, Bd. 35, Nr. 3/4, 1996, Seiten 313-335, XP000635079 ISSN: 0018-8670

## Beschreibung

Die Erfindung befaßt sich mit der Übertragung von zusätzlichen digitalen Informationen parallel zu einem analogen Fernsehsignal und betrifft ein hierzu geeignetes Kodierverfahren, ein entsprechendes Dekodierverfahren sowie einen Kodierer und einen Dekodierer.

Es gibt eine Vielzahl von Verfahren, die es ermöglichen, parallel zu einem analogen Fernsehsignal Informationen digital zu übertragen. Meist wird dazu die vertikale Austastlücke genutzt. Dies sind Bildzeilen, die außerhalb des sichtbaren Fernsehbildes liegen. Die häufigste Anwendung für solche Verfahren ist der Teletext (in Deutschland auch Fernsehtext genannt).

In Ausnahmefällen ist es zwar auch möglich, Zeilen in der vertikalen Austastlücke, die nicht für Teletext genutzt werden können, für die Übertragung von zusätzlichen Informationen zu nutzen. In der Regel hat jede andere Nutzung der vertikalen Austastlücke jedoch zur Folge, daß dann weniger Übertragungskapazität für Teletext zur Verfügung steht, so daß sich für die Teletextnutzer die Zugriffszeit verlängert.

Die Erfindung hat sich die Aufgabe gestellt, diesen Nachteil beseitigen und ein Verfahren anzugeben, das es ermöglicht, durch eine neuartige Kodierung der Teletextdaten zusätzliche Übertragungskapazität für digitale Informationen zu gewinnen, ohne daß dadurch die Übertragung der Teletextdaten beeinträchtigt wird, d.h. es soll die Möglichkeit eröffnet werden, die für die Teletextübertragung bereitgestellte Übertragungskapazität zur Übertragung von zusätzlichen digitalen Informationen zu nutzen, ohne daß dadurch das Erscheinungsbild der jeweiligen Teletextseite verändert wird.

Die erwähnte neuartige Kodierung zur Lösung dieser Aufgabe ist Gegenstand des in Anspruch 1 angegebenen Kodierverfahrens.

Ein entsprechendes Dekodierverfahren ist in Anspruch 6 angegeben.

Ein Kodierer und ein Dekodierer zur Durchführung der genannten Kodier- bzw. Dekodierverfahren sind in Anspruch 7 bzw. 8 angegeben.

Der Dekodierer ist vorzugsweise Bestandteil einer der folgenden Einrichtungen: eines Fernsehgeräts, eines Videorecorders, eines Decoders (oder Decoderchips), einer Set-top-Box, einer Tunerkarte oder eines Personalcomputers.

Bei Teletext erfolgt die Übertragung der Teletextdaten zeichenweise. Dabei ist jeder Zeichencode entweder mit einem sichtbaren Zeichen (z.B. 'A', 'B', 'C') oder mit einem unsichtbaren Steuerzeichen (z.B. für rote Schrift, blaue Schrift) belegt. Ein Sonderfall ist das Leerzeichen, das weder sichtbar ist, noch eine Steuerfunktion hat. Es gibt ferner in jedem Kontext Steuerzeichen, die keine Wirkung haben (z.B. das Steuerzeichen für rote Schrift, wenn bereits rote Schrift ausgewählt ist).

Die Funktion von Steuerzeichen im Zusammenhand mit der Übertragung von Teletextdaten ist bekannt. Sie wurde z.B. durch die Literaturstelle CHAMBERS J.P. "Enhanced UK teletext moves towards still pictures", IEEE TRANSACTIONS ON CONSUMER ELECTRONICS; August 1980, USA, Bd. CE-26, Nr. 3, S. 527-554, XP002185650, ISSN: 0098-3063, beschrieben.

Bei dem Verfahren gemäß der Erfindung kann die Textseite zunächst in der üblichen Weise mit Leerzeichen und/oder wirkungslosen Steuerzeichen erstellt werden. In der fertig vorbereiteten Textseite werden alle wirkungslosen Steuerzeichen durch Steuerzeichen ersetzt, die im jeweiligen Kontext ebenfalls keine Auswirkung auf das Erscheinungsbild der Teletextseite haben und deren Kombination die Kodierung einer zusätzlichen Information darstellt. Dabei kann man schrittweise so vorgehen, daß man zunächst alle wirkungslosen Steuerzeichen durch Leerzeichen ersetzt. In einem nächsten Schritt werden dann Leerzeichen gezielt durch die genannten Steuerzeichen ersetzt, deren Kombination die Kodierung einer zusätzlichen Information darstellt. Es gibt in jedem Kontext immer mindestens drei derartige Steuerzeichen. Jedes Leerzeichen kann also entweder belassen, oder gegen eines dieser drei Steuerzeichen ausgetauscht werden, ohne daß sich das Erscheinungsbild der Teletextseite ändert. Dadurch lassen sich mit jedem Leerzeichen über diese insgesamt vier Möglichkeiten zwei Bit an Zusatzinformation kodieren, ohne daß die Teletextübertragung beeinträchtigt wird.

Ein geeigneter Dekodierer für eine so kodierte Information wird alle Leerzeichen und wirkungslosen Steuerzeichen innerhalb der Teletext suchen und kann dann die kodierten Zusatzinformationen zurückgewinnen.

Eine weitere Verbesserung kann dadurch erreicht, daß längere Folgen von Leerzeichen durch Folgen von Steuerzeichen ersetzt werden, die in Ihrer Gesamtheit ebenfalls wirkungslos sind. Dadurch können bei langen Folgen von Leerzeichen etwa drei Bit an Zusatzinformationen pro Leerzeichen kodiert werden.

Ein mögliche Erweiterung des Verfahrens besteht darin, auch nicht wirkungslose Steuerzeichen gezielt so zu ersetzen, daß im Endergebnis der zwar gleiche Bildeindruck auf der Teletextseite entsteht, aber zusätzliche Informationen kodiert werden können.

Obwohl der einschlägige Fachmann ohne weiteres in der Lage ist, die Erfindung anhand der vorangehenden Darlegungen zu realisieren, sei zum besseren Verständnis im folgenden ein einfaches Beispiel vorgestellt.

### Kodierschema

(00) Leerzeichen
(01) Steuerzeichen für Vordergrundfarbe
(10) Steuerzeichen für Blinken/nicht Blinken
(11) Steuerzeichen für doppelte/einfache Höhe

### Zu kodierende Bitfolge:

11 10 01 00 00 11 01

### Ursprüngliche Teletextdaten

(1)aurea(0)prima(0)sata(1)est(0)aetas(0)quae(0)vindice(0)nullo

### Ersetzen wirkungsloser Steuerzeichen durch Leerzeichen:

(1)aurea(0)prima(0)sata(0)est(0)aetas(0)quae(0)vindice(0)nullo

### Ersetzen von Leerzeichen durch wirkungslose Steuerzeichen gemäß Kodierschema:

(1)aurea(3)prima(2)sata(1)est(0)aetas(0)quae(3)vindice(1)nullo

### Empfänger sucht Leerzeichen und wirkungslose Steuerzeichen:

(3)(2)(1)(0)(0)(3)(1)

### Empfänger rekonstruiert ursprüngliche Bitfolge:

11 10 01 00 00 11 01
(0) Leerzeichen
(1) Vordergrundfarbe rot
(2) Blinken aus
(3) einfache Höhe

## Patentansprüche

1. Verfahren zur Kodierung von digitalen Informationen zusätzlich zu Teletextdaten, die zusammen mit einem Fernsehsignal in einem Fernsehkanal, vorzugsweise in der vertikalen Austastlücke des Fernsehsignals, übertragen werden,
wobei die Übertragung der genannten Teletextdaten im wesentlichen zeichenweise erfolgt und jeder Zeichencode entweder mit einem sichtbaren Zeichen oder mit einem unsichtbaren Steuerzeichen belegt ist oder ein Leerzeichen darstellt, das weder in der Darstellung der Teletextseite in Erscheinung tritt noch eine Steuerfunktion hat, und wobei ferner in jedem Kontext Steuerzeichen vorhanden sein können, die keine Wirkung haben,
**dadurch gekennzeichnet,**
**daß** in den Teletextdaten Leerzeichen und/oder wirkungslose Steuerzeichen detektiert und zumindest teilweise durch solche Leerzeichen oder wirkungslose Steuerzeichen ersetzt werden, deren Kombination die Kodierung einer zusätzlichen Information darstellt.

2. Kodierverfahren nach Anspruch 1,
**dadurch gekennzeichnet,**
**daß** die Teletextseite zunächst in herkömmlicher Weise mit Leerzeichen und/oder wirkungslosen Steuerzeichen erstellt wird und danach diese durch die Kodierung der zusätzlichen Information ersetzt werden.

3. Kodierverfahren nach Anspruch 1 oder 2, **dadurch gekennzeichnet,**
**daß** die wirkungslosen Steuerzeichen zunächst durch Leerzeichen ersetzt werden
und **daß** die Leerzeichen in einem nächsten Schritt durch Leerzeichen oder wirkungslose Steuerzeichen ersetzt werden, deren Kombination die Kodierung die gewünschte zusätzliche Information darstellt.

4. Kodierverfahren nach einem der Ansprüche 1 bis 3, **dadurch gekennzeichnet, daß** längere Folgen von Leerzeichen durch Folgen von Steuerzeichen ersetzt werden, die in Ihrer Gesamtheit ebenfalls wirkungslos sind.

5. Kodierverfahren nach einem der Ansprüche 1 bis 4, **dadurch gekennzeichnet, daß** auch nicht wirkungslose Steuerzeichen so ausgetauscht werden, daß das Erscheinungsbild der Teletextseite nicht verändert wird, jedoch zusätzliche Informationen kodiert werden können.

6. Verfahren zum Dekodieren eines Signals, welches nach dem Kodierverfahren nach einem der vorhergehenden Ansprüche kodiert ist,
**dadurch gekennzeichnet,**
**daß** in den empfangenen Teletextdaten die Positionen detektiert werden, an denen sich Leerzeichen und/oder wirkungslose Steuerzeichen befinden müßten, und daß die an diesen Stellen kodierte zusätzliche Information erfaßt und dekodiert wird.

7. Kodierer zur Durchführung des Verfahrens gemäß einem der Ansprüche 1 bis 5 zur Kodierung von digitalen Informationen zusätzlich zu Teletextdaten, die zusammen mit einem Fernsehsignal in einem Fernsehkanal, vorzugsweise in der vertikalen Austastlücke des Fernsehsignals zur Übertragung vorgesehen sind,
wobei die Übertragung der genannten Teletextdaten im wesentlichen zeichenweise erfolgt und jeder Zeichencode entweder mit einem sichtbaren Zeichen oder mit einem unsichtbaren Steuerzeichen belegt ist oder ein Leerzeichen darstellt, das weder in der Darstellung der Teletextseite in Erscheinung tritt noch eine Steuerfunktion hat, und wobei ferner in jedem Kontext Steuerzeichen vorhanden sein können, die keine Wirkung haben,
**dadurch gekennzeichnet,**
**daß** der Kodierer adaptiert ist, um in den Teletextdaten Leerzeichen und/oder wirkungslose Steuerzeichen zu detektieren und zumindest teilweise durch solche Leerzeichen oder wirkungslose Steuerzeichen zu ersetzen, deren Kombination die Kodierung einer zusätzlichen Information darstellt.

8. Dekodierer zur Durchführung des Verfahrens nach Anspruch 6,
**dadurch gekennzeichnet,**
**daß** der Dekodierer adaptiert ist, um in der empfangenen Teletextseite die Positionen zu detektieren, an denen sich Leerzeichen und/oder wirkungslose Steuerzeichen befinden müßten, und um die an diesen Stellen dekodierte zusätzliche Information zu erfassen und zu dekodieren.

9. Dekodierer nach Anspruch 8,
**dadurch gekennzeichnet,**
**daß** der Dekodierer Bestandteil einer der folgenden Einrichtungen ist:
eines Fernsehgeräts, eines Videorecorders, eines Decoders oder Decoderchips, einer Set-top-Box, einer Tunerkarte oder eines Personalcomputers.

## Claims

1. Method for coding of digital information in addition to teletext data, that is transmitted together with a tv signal on a tv channel, especially within the vertical blanking interval of the tv signal,
whereas the transmission of the mentioned teletext data takes place primarily character by character and every character code is either used for a visible character or a invisible control character or represents a space, that is neither shown on the teletext page nor has a control function and where also in every context control characters can exist that have no effect,
**characterised in**
**that** within the teletext data spaces and/or control characters without effect are detected and at least in part are replaced by such spaces or control characters without effect, so that their combination forms the coding of an additional information.

2. Coding method according to claim 1,
**characterised in**
**that** the teletext page is initially generated in the usual manner with spaces and/or control characters without effect and those are replaced later by the coding of the additional information.

3. Coding method according to claim 1 or 2,
**characterised in**
**that** the control characters without effect are replaced by spaces first
and **that** during a later step the spaces are replaced by spaces or control characters without effect, so that their combination forms the coding of the desired additional information.

4. Coding method according to claim 1 to 3,
**characterised in**
**that** longer sequences of spaces are replaced by sequences of control characters, that are without effect overall.

5. Coding method according to claim 1 to 4,
**characterised in**
**that** also control characters with an effect are replaced in a way, that the appearance of the teletext page does not change but additional information can be coded.

6. Decoding method for a signal, that is coded by the coding methods according to the previous claims,
**characterised in**
**that** within the received teletext data the positions of spaces and/or control characters are detected and the information coded at those positions is collected and decoded.

7. Coder for the implementation of the method according to claim 1 to 5 for the coding of digital information in addition to teletext data, that is provided for transmission together with a tv signal on a tv channel, especially within the vertical blanking interval,
whereas the transmission of the mentioned teletext data takes place primarily character by character and every character code is either used for a visible character or an invisible control character or represents a or represents a space, that is neither shown on the teletext page nor has a control function and where also in every context control characters can exist that have no effect,
**characterised in**
**that** the coder is adapted to detect spaces and/or control characters within the teletext data and replace those at least in part by such spaces or control characters without effect so that their combination forms the coding of an additional information.

8. Decoder for the implementation of the method according to claim 6,
**characterised in**
**that** the decoder is adapted to detect the positions of spaces and/or control characters without effect within the received teletext page and to collect and decode the information coded at those positions.

9. Decoder according to claim 8,
**characterised in**
**that** the decoder is part of one of the following devices:
a tv set, a video recorder, a decoder or decoder chip, a set-top box, a tuner card or a personal computer.

## Revendications

1. Procédé de codage des informations numériques additionellement à des donnés de télétexte, qui sont transmis conjointement avec un signal de télévision, de préference dans l'intervalle de suppression de trame du signal de télévision,
dans lequel la transmission desdit donnés de télétexte se fait pour l'essentiel signe par signe, et chaque code de signe è occupé soit avec un signe visible soit avec un signe invisible de commande ou représente un signe d'espacement, qui ne se montre ni dans la représentation de la page de télétexte ni a une fonction de commande,
et dans lequel de signes de commande, n'ayant aucune efficacité peuvent exister dans chaque contexte,
**caracterisé en ce que** dans les pages de télétexte les signes d'espacement et/ou les signes inefficaces de commande sont détectés et sont du moins en partie remplacés par de tels signes d'espacement, dont la combination représente le codage d'une information additionelle.

2. Procédé de codage selon la revendication 1, **caracterisé en ce que** la page de télétexte d'abord è élaborée traditionellement avec de signes d'espacement et/ou avec signes inefficaces de commande, et après ceux-ci sont remplacés par le codage de l'information additionelle.

3. Procédé de codage selon la revendication 1 ou 2, **caracterisé en ce que**
les signes inefficaces de commande d'abord sont remplacés par de signes d'espacement,
et dans un pas suivant du procédé les signes d'espacement sont remplacés par des signes d'espacement ou par des les signes inefficaces de commande, dont la combination représente l'information additionelle souhaitée.

4. Procédé de codage selon quelconques des revendications 1 à 3, **caracterisé en ce que** des successions plus longues de signes d'espacement sont remplacés par des successions de signes de commande, qui dans leur totalité sont inefficaces de même.

5. Procédé de codage selon quelconques des revendications 1 à 4, **caracterisé en ce que** des signes de commande, qui ne sont pas inefficaces, sont échanges ainsi que l'image visible de la page de télétexte n'è pas altérée, pourtant des informations additionells peuvent être codées.

6. Procédé de décodage d'un signal, qui a été codé selon le procédé de codage selon quelconques des revendications précedentes,
**caracterisé en ce que**
dans les données de télétexte reçus les positions les signes d'espacement et/ou les signes commande sont détectées, et l'information additionelle codée à ces positions è détectée et décodée.

7. Encodeur pour l'exécution du procédé selon quelconques des revendications 1 à 5, pour coder des informations numériques additionellement à des donnés de télétexte, qui sont transmis conjointement avec un signal de télévision, de préference dans l'intervalle de suppression de trame du signal de télévision,
dans lequel la transmission desdit donnés de télétexte se fait pour l'essentiel signe par signe, et chaque code de signe è occupé soit avec un signe visible soit avec un signe invisible de commande ou représente un signe d'espacement, qui ne montre ni dans la représentation de la page de télétexte ni a une fonction de commande,
et dans lequel de signes de commande, n'ayant aucune efficacité peuvent exister dans chaque contexte,
**caracterisé en ce que** l'encodeur è adapté à détecter dans les pages de télétexte les signes d'espacement et/ou les signes inefficaces de commande et à les remplacer du moins en partie par de tels signes d'espacement, dont la combination représente le codage d'une information additionelle.

8. Décodeur pour l'exécution du procédé selon la revendication 6,
**caracterisé en ce que**
le décodeur è adapté à détecter les positions des signes d'espacement et/ou des signes de commande dans les données de télétexte reçus, et à détecter et décoder l'information additionelle codée à ces positions.

9. Décodeur selon la revendication 8,
**caracterisé en ce que**
le décodeur è composante d'un des équipements suivants: un téléviseur, un magnétoscope, un decoder, une set-top-box, d'une carte syntoniseur ou un micro-ordinateur.
